# EUROPÄISCHE PATENTSCHRIFT

(11) **EP 4 070 407 B1**
(45) Veröffentlichungstag und Bekanntmachung des Hinweises auf die Patenterteilung: **26.04.2023**
(21) Anmeldenummer: 21703853.8
(22) Anmeldetag: 30.01.2021
(51) Int. Cl.: H01M 50/502, H01M 10/613, H01M 50/119, H01M 50/213, H01M 50/224

(54) **MODULSCHICHT UND DARAUS AUFGEBAUTES BATTERIESYSTEM**
MODULE LAYER AND BATTERY SYSTEM MADE THEREFROM
COUCHE MODULAIRE ET SYSTÈME DE BATTERIE RÉALISÉ À PARTIR DE LADITE COUCHE MODULAIRE

(30) Priorität: 07.02.2020 DE 102020103230
(43) Veröffentlichungstag der Anmeldung: 12.10.2022
(73) Patentinhaber: ElringKlinger AG, 72581 Dettingen/Erms (DE)
(72) Erfinder: HANTSCHEL, Jochen, 72581 Dettingen/Erms (DE); SCHMIDT, B.Eng. Tobias, 72581 Dettingen/Erms (DE)
(74) Vertreter: Schmidt, Axel
(86) Internationale Anmeldenummer: PCT/EP2021/052223
(87) Internationale Veröffentlichungsnummer: WO 2021/156160

(56) Entgegenhaltungen:
- EP-A2- 2 343 752
- US-A1- 2009 297 892
- US-A1- 2013 122 341

## Beschreibung

Die vorliegende Erfindung betrifft eine Modulschicht und ein daraus aufgebautes Batteriesystem, das als Vorrichtung zur Versorgung mit sowie zur Speicherung von elektrischer Energie zwischen zwei abschließenden Endkörpern eine Anzahl von Batteriemodulen umfasst, die miteinander elektrisch in Serie geschaltet sind. Jedes Modul besteht dabei aus einer Anzahl elementarer Zellen, bei denen es sich in der Regel um Lithium-Ionen-Akkus handelt.

Aus dem Stand der Technik ist bekannt, dass ein Batteriesystem der genannten Art mit Batteriemodulen aufgebaut ist, die in der Form von Modulebenen aufeinandergestapelt sind und zwischen zwei Außenanschlüssen sowie eine elektronische Regelung und Sicherungen etc. enthaltenden Endkörpern abgeschlossen sowie mechanisch fixiert werden. Damit ergibt sich ein Batteriesystem aus miteinander verschalteten Modulebenen in Form eines Stacks, siehe z.B. EP 2 343 752 A2 oder DE 10 2013 100 545 A1.

In bekannten Batteriesystemen, in denen die Zellen in sog. Packebenen angeordnet zwischen zwei plattenförmigen Endkörpern durch Zugbolzen mechanisch zu einer Einheit verspannt werden, werden die Zellen auch so angeordnet, dass eine Reihenschaltung dadurch entsteht, dass z.B. Zellen unmittelbar in Reihe angeordnet werden, wobei der Pluspol der einen Zelle auf einen Becher als Außengehäuse und Minus-Pol einer anderen Zelle einer nachfolgenden Schicht kontaktiert. Diese Anordnung kann so gewählt werden, dass die Reihenschaltung auf der einen Seite vom Anfang zum Ende des Batteriesystems läuft sowie auf der gegenüberliegenden Seite vom Ende zum Anfang zurück. Auf diese Weise wird eine niederimpedante Bauweise mit zwei äußeren Anschlüssen ohne dedizierten Rückleiter realisiert, siehe z.B. EP 3 082 174 A1.

Bei anderer elektrischer Verschaltung der Zellen miteinander offenbart auch die US 2013/0122341 A1 einen Aufbau aus Zell-Paketen in Ebenen bzw. Schichten.

Zum Aufbau eines gestackten Batteriesystems ist es erforderlich, die einzelnen Batteriemodule der Ebenen hintereinander in Reihe zu schalten und einen gesammelten Strom bzw. Summenstrom auf die einzelnen parallel geschalteten Batteriezellen zu verteilen. Zudem müssen beide elektrischen Potenziale einer fertigen Reihenschaltung eines gestapelten bzw. gestackten Batteriesystems in einer Hochvoltverschaltungsbox zusammengeführt werden. Die Rückführung des einen Batteriepols soll nicht außerhalb des Gehäuses erfolgen, weil vor einer Herausführung zwingend immer Trennschaltelemente vorgesehen sein müssen, und diese Trennschaltelemente befinden sich vorzugsweise nur in der Hochvoltverschaltungsbox, die i.d.R. ein Bestandteil eines der Endkörper ist.

Die vorstehend genannten Batteriesysteme erzielen zwar hohe Energiedichten, sie sind jedoch zur Kühlung auf eine Durchströmung mit einer isolierenden Kühlflüssigkeit zwischen den Zellen angewiesen. Zudem ist allen gestackten Batteriesystemen gemein, dass sie beim Zusammenbau unmittelbar durch Einbringen und Anziehen der Zugstäbe mechanisch verkürzt werden. Dabei werden z.B. Dichtungen gepresst oder elektrische Federkontakte zusammengedrückt. Ein geschichtet gestapelter bzw. gestackter Aufbau erfolgt dabei gemäß dem vorstehend zitierten Stand der Technik immer schichtweise, d.h. es muss eine Ebene nach der anderen aufgebaut werden. Module, die weiter unten liegen, sind also schon verschaltet und damit z.B. für eine mechanische Korrektur nicht mehr zugänglich.

Die vorliegende Erfindung hat das Ziel, eine Vorrichtung der vorstehend genannten Art unter Verbesserung der Zugänglichkeit einzelner Stacks sowie deren Kühlung zu schaffen.

Diese Aufgabe wird erfindungsgemäß durch die Merkmale von Anspruch 1 dadurch gelöst, dass eine Modulschicht als konstruktive Einheit aufgebaut ist, bei der die Zellen in der Modulschicht auf einem Bodenelement einer Wanne von einem als Kühlkörper ausgebildeten äußeren Rahmen der Wanne umschlossen angeordnet sind, der äußere Rahmen der Wanne eine Dichtung aufweist und die Wanne in einem zentralen Bereich des Bodenelements einen Abschnitt eines Zentralschachts aufweist, in den mit den Zellen einer jeweiligen Modulschicht leitend verbundene Sammelleiter hineinragend ausgebildet sind.

Jede Modulschicht bietet als eine Einheit für sich gegenüber bekannten Bauformen eine deutliche Verbesserung in der Zugänglichkeit solcher einzelner Stacks. Damit könnten einzelne Modulschichten bzw. Stacks nun auch direkt als eine Einheit ausgetauscht werden, was bei bekannten Batteriesystemen so nie möglich wäre. Eine erfindungsgemäße Modulschicht weist demnach weiter die Eigenschaft auf, dass ein Wärmeübergang zur Entwärmung der Modulschicht über eine Bodenplatte in ein Kühlsystem an einem Rand einer Bodenplatte angeordnet ist. Für die Entwärmung der Zellen ist eine Bodenplatte, die in einer Ausführungsform der Erfindung vorteilhafterweise aus Aluminium besteht, zuständig, die eine Verlustwärme der Zellen zum Bodenplattenrand und dort zu dem als Kühlkörper ausgebildeten Wandungen der äußeren Rahmen der Wanne hin führt. Dort wird die Wärme dann z.B. an eine Kühlflüssigkeit abgegeben. Zudem ist in jeder Bodenplatte in einem zentralen Bereich ein Abschnitt eines Zentralschachts angeordnet, so dass dort keine Zellen vorgesehen sein können. Naturgemäß weisen sonst in der Mitte der Bodenplatte angeordnete Zellen schon deshalb eine vergleichsweise schlechte Entwärmung auf, weil diese im Durchschnitt den weitesten Weg zum Rand haben und noch viele weitere sich entwärmende Zellen auf diese Weg Wärme freisetzen. Eine vergleichsweise großflächige Kühlung an einem Außenrahmen unter anderweiter Nutzung einer heißesten Zone verbessert eine Kühlung bzw. Entwärmung aller Zellen einer Modulschicht. Zur Verbesserung der Entwärmungssituation sind in einem zentralen Bereich der vorgeschlagenen Modulschicht erfindungsgemäß keine Zellen vorgesehen. Hier sind vielmehr elektrische Anschlüsse in einem Abschnitt eines Zentralschachts vorgesehen. Der sich bei Stapelung mehrerer Modulschichten ergebende Zentralschacht ist über seine Abschnitte zur Entwärmung eines zentralen Bereichs vorzugsweise mittig in jeder Modulschicht ausgebildet. Dieser Schacht wird damit vorteilhafterweise auch für eine zusätzliche Entwärmung genutzt, wie auch zur Bündelung weiterer Leitungen bzw. Signal- und/oder Steuerleitungen.

Gemäß einer Weiterbildung der Erfindung ist der Abschnitt des Zentralschachtes um eine Ausnehmung herum in dem Bodenelement vorgesehen. Hier ist der Abschnitt als Druckgießteil aus einem Kunststoff oder Aluminium fixiert angeordnet. Beispielsweise ist der Abschnitt als rechteckiger oder zylindrischer Hohlkörper ausgebildet, der in oder an der Ausnehmung herum in dem Bodenelement verrastet eingebracht oder mit der Wanne als Element in dem Bodenelement einstückig ausgebildet ist.

Auch stellt ein Batteriesystem, das als Vorrichtung zur Versorgung mit und Speicherung von elektrischer Energie zwischen zwei abschließenden Endkörpern eine Anzahl von Modulschichten der vorstehend genannten Art aufweist, eine vorteilhafte Lösung der vorstehenden Aufgabe dar. Das Batteriesystem ist als Stapel gleichartiger Modulschichten in einer Richtung parallel der Längsachse der Zellen aufgebaut, wobei eine Dichtung an einem Rahmen einer Modulschicht elektrisch isolierend an einem Bodenelement einer jeweils benachbarten Modulschicht abdichtend angeordnet ist, jede Modulschicht einen Abschnitt eines Zentralschachts aufweist, in den mit den Zellen der jeweiligen Modulschicht leitend verbundene Sammelleiter hinein ragen, um über alle Modulschichten hinweg Sammelschienen zu zwei äußeren Kontaktpolen des Batteriesystems hin zu bilden.

Vorteilhafte Weiterbildungen sind Gegenstand der jeweiligen abhängigen Ansprüche. Demnach sind die einzelnen Module als vorgefertigte Einheiten ausgebildet, in denen die in die Wanne eingebrachten Batteriezellen mittels einer Vergussmasse an dem Bodenelement fixiert sind. Damit ergibt sich eine kompakte und in sich mechanisch sehr belastbare Einheit, die an ihrer freien Oberseite durch ein Bodenelement einer nachfolgenden Modulschicht oder aber durch einen Endkörper im Zuge der mechanischen Fixierung abdichtend und elektrisch isolierend verschlossen ist.

In einer besonders vorteilhaften Weiterbildung der Erfindung ist der Abschnitt eines Zentralschachts einer jeden Modulschicht als Segment bzw. Abschnitt ausgeführt. Das so gebildete Segment ist in sich in voneinander getrennte Räume unterteilt, wobei diese Räume voneinander fast über eine volle Höhe des Abschnitts voneinander getrennt sind, um z.B. ein Einführen von Sammelleitern zu ermöglichen. Damit ist jede Modulschicht so aufgebaut, dass sich ein Zentralschacht eines Stapels von Modulschichten in Teilschächte aufgeteilt. So sind Teil-Stromschienen und Rückleiter u.a. als deren jeweiliger Inhalt über die Abschnitte hinweg voreinander getrennt und damit auch in gewisser Weise elektrisch wie mechanisch gegeneinander geschützt, wie noch anhand von Abbildungen eines Ausführungsbeispiel dargestellt wird.

Vorteilhafterweise weist der Zentralschacht mindestens zwei getrennte Segmente auf. Diese Segmente nehmen räumlich getrennt mindestens die über alle Modulschichten hinweg zu zwei äußeren Kontaktpolen des Batteriesystems hin angeordneten Sammelschienen auf. In den am schlechtesten zu entwärmenden zentralen Bereich einer jeden Modulschicht ragen nun Sammelleiter in einen Abschnitt hinein, die mit den Zellen der jeweiligen Modulschicht leitend verbunden sind. Damit nachfolgend übereinander gestapelte Abschnitte mehrerer Modulschichten bilden dann einen Zentralschacht, durch den über alle Modulschichten hinweg Sammelschienen eine leitende Verbindung zu zwei äußeren Kontaktpolen des Batteriesystems hin bilden. Ein Zentralschacht bietet neben der Möglichkeit einer zusätzlichen Entwärmung gerade im Zentrum jedes Modulschicht bei elektrischer wie mechanischer Trennung u.a. von Teilstromschienen und Sammelleitern auch ausreichend Raum zum Ausgleich mechanisch oder thermisch hervorgerufener Längenänderungen von Dichtungen, Rahmen und/oder elektrischen Leitern.

In einer besonders vorteilhaften Weiterbildung der Erfindung weist der Abschnitt des Zentralschachts fixierende oder rastende Aufnahmen für die Sammelleiter auf. Die Sammelleiter sind über Kontaktstellen mit einem Netzwerk zum Verschalten der elementaren Zellen der betreffenden Modulschicht verbunden. Temperaturunterschiede, aber auch Schwingungen könnten von den Zellen her eine Kraft auf die Sammelleiter übertragen. Hiergegen wirken die Verrastungen bzw. Fixierungen am Abschnitt des Zentralschachts nach Art einer Zugentlastung. Damit wird keine zusätzliche mechanische Spannung in den gesamten Zentralschacht hineingetragen.

Die Aufnahmen sind vorteilhafterweise derart ausgebildet, dass ein Längenausgleich der Sammelleiter nur in einer Richtung parallel zu der Längsachse der Zellen möglich ist. Ein Ausgleich entlang einer Längsachse ist damit möglich, während lose Teile innerhalb des beschriebenen Aufbaus vermieden werden.

Vorzugsweise sind die Zellen in einer Modulschicht miteinander in Serien- und/oder Parallel-Teilschaltungen über eine Kontaktplatine elektrisch miteinander verbunden. Die Kontaktplatine ist je Polarität über eine Anschlussleiste an einen Sammelleiter elektrisch angeschlossen. In einer Weiterbildung der Erfindung sind die Anschlussleiste entlang einander gegenüberliegender Außenkanten der Kontaktplatine angeordnet, wobei die Anschlussleisten selber kammartig ausgebildet sind, um eine Vielzahl von Anschlüssen für Leitbahnen in oder aus der Kontaktplatine bereitzustellen.

In einer wesentlichen Weiterbildung der Erfindung ist als elektrische Verbindung zwischen benachbarten Modulschichten in einem Batteriesystem mindestens eine Teil-Stromschiene vorgesehen. Eine derartige Teil-Stromschiene weist einen ungefähr S-förmigen Verlauf auf. An freien Enden ist jede Teil-Stromschiene zum Kontaktieren mit Enden der Sammelleiter ausgebildet, die in den Abschnitt des Zentralschachts hineinragen. Dazu sind wahlweise form-, kraft- und/oder stoffschlüssige Verbindungen vorgesehen. Besonders bevorzugt wird hier eine elektrische Verbindung durch Verpressen oder Verschrauben.

In einer Ausführungsform der Erfindung sind die Sammelleiter als Stanz-Biegeteile aus Aluminium oder Kupfer hergestellt. Außerhalb der für eine form-, kraft- und/oder stoffschlüssige Verbindung ausgebildeten End-Bereiche sind diese Metallteile in einer Weiterbildung der Erfindung mit einer elektrischen Isolierungsschicht überzogen. Diese Isolierung ist vorzugsweise als Beschichtung oder als Schlauchstück ausgeführt.

Vorstehend ist damit ein aus Modulschichten als einzelnen Einheiten aufgebautes Batteriesystem beschrieben worden, das nicht auf eine Umströmung jeder einzelnen Batteriezelle zur Entwärmung angewiesen ist, und eine Möglichkeit für elektrische Verbindungen enthält, die beim Stapeln bzw. Stacking zwischen den Modulen aufgrund einer Verspannung von Dichtungen u.a. auftretenden Änderungen der Wege und Abstände aufzunehmen bzw. auszugleichen und einen Teilstrom aus jeder der Zellparallelschaltungen einer Modulschicht aufzunehmen und diesen kostengünstig, verlustarm und leichtgewichtig auf die erste Zellparallelschaltungsebene der nächsten Modulschicht zu verteilen. Dabei sind die Modulschichten vorzugsweise stets identisch aufgebaut. Zur Beseitigung eines prinzipiellen Nachteils bei einer Entwärmung zentral in der Mitte eines jeweiligen Stacks gelegener Zellen werden dort erfindungsgemäß gar keine Zellen platziert. Stattdessen wird dieser Zentralbereich als Ort für die Anordnung der elektrischen Reihenschaltungselemente der Modulschichten für einen jeweiligen Abschnitt eines Zentralschachts gewählt. Eine Bodenplatte der Modul-Wanne wird in diesem Bereich ausgespart. In die Ausnehmung in dem Bodenelement wird ein ungefähr zylindrischer oder säulenartiger Abschnitt mit rechteckigem Querschnitt eingebracht, der vorzugsweise aus Kunststoff oder einem mit elektrischen Isolierungen versehener Aludruckguss hergestellt ist.

Eine Stromsammel-/-Verteilstruktur von Plus- und Minuspol eines jeden Moduls wird an einen entsprechenden Abschnitt dieses Teils des Zentralschachts herangeführt. Mindestens eine der heranführenden Stromschienen ist derart ausgebildet, dass sie bei der Montage des Moduls über das darunter liegende Modul direkt oder indirekt über ein zusätzliches Stromschienenelement mit dem jeweils darunter anordneten Modul elektrisch verbunden werden kann und eine elektrische Reihenschaltung ausbildet. Diese mindestens eine Stromschiene ist dabei so ausgebildet, dass sie in der Lage ist, die beim Verspannen der Module zum gestackten Batteriesystem entstehenden Wege bzw. Längenänderungen zwischen den Modulen z.B. im Bereich von ca. 2mm unter elastischer Verformung aufzunehmen. Dazu wird in einem Kopfbereich der Zellen der Modulschichten der notwendige Platz bereitgehalten und die Lage der jeweiligen Stromschiene mittels eines Kunststoffteils in den anderen Raumachsen fixiert.

Um die Stromverteilung auf die Zellen einer Modulschicht platz- und gewichtssparend darzustellen, sind an den zellseitigen Enden der Stromschienen zu dem Zentralschacht hin Stromverteilschienen platziert, die vorzugsweise aus einem abgelängten Aluminium-Strangpressprofil hergestellt werden. Vorteilhafterweise kann durch die Wahl eines modulspezifischen Strangpressprofils die Innenkontur der Modulwand ideal abgebildet und die Stromverteilschiene an diese Innenkontur angeschmiegt werden. Damit ist eine besonders platzsparende und im Vergleich zu Kupferschienen kostengünstige Möglichkeit geschaffen, den Strom auf die Zellen zu verteilen. Gleichzeitig kann durch ein Anschmiegen an eine von Wasser hinterströmte Modulgehäuse-Innenwand des Rahmens der Modulwanne als Teilgehäuse sichergestellt werden, dass die Stromverteilschiene gut entwärmt wird. Ein gegenüber Kupfer etwas höherer Widerstandsbeiwert von Aluminium, insbesondere der diverser Strangpresslegierungen, fällt dadurch bei den Verlusten nicht ins Gewicht. Da eine Innenwand eines mehrschaligen Rahmes aus Kunststoff gebildet werden kann, bestehen in dieser Ausführungsform dann auch keine Probleme hinsichtlich einer Ausbildung von Isolationsabständen, wie dies bei metallischen Modulgehäusen üblicherweise der Fall ist. Die zu dem Zentralschacht verlaufenden Stromschienen werden aus Korrosionsschutzgründen vorzugsweise ebenfalls aus Aluminium ausgeführt.

Ein Kunststoff- oder Aluminiumteil des Zentralschachts-Abschnitts bildet mehrere Kanäle aus. Einer dieser Kanäle bildet beim Aufeinander-Stacken von Modulschichten eine durch alle Modulschichten hindurch verlaufende Hohlkammer zur Aufnahme einer vollständig durchgehenden Stromschiene aus Aluminium oder Kupfer. Diese Schiene bildet die Rückführung des Stroms vom hintersten Modul zu einer Hochvoltverschaltungsbox hin. Die mechanische Fixierung dieser durchgehenden Stromschiene erfolgt mit separaten Abstandshalteelementen, vorzugsweise aber durch eine S-förmig geschlängelte Ausführung der Stromschiene selber derart, dass diese sich in der durchgehenden Hohlkammer an die Wand drückt und sich damit selbst in der Hohlkammer fixiert.

Vorteilhafterweise ist der Zentralschacht als Summe von aneinander anschließenden Abschnitten zur Entwärmung eines zentralen Bereichs jeder Modulschicht ausgebildet. Um den Zentralbereich der Modulschichten und durch hohe Stromflüsse belastete Leiter besser zu entwärmen, dient der Zentralschacht vorzugsweise mittels aktiver Belüftung dazu, mit Hilfe einer aktiven Luftumwälzung zwischen dem Hochvoltverschaltungsbox-Modul mit einem Kühlmittelverteiler und einer entgegengesetzt positionierten Druckabschlussplatte diesen Zentralbereich besser zu entwärmen. Damit werden Temperaturunterschiede zwischen den Zellen reduziert und es kann auch Verlustwärme von innen nach außen hin abgegeben werden.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine perspektivische Ansicht einer Wanne mit einem Bodenelement und an einem Rand anschließenden und in eine endseitige Dichtung auslaufenden äußeren Rahmen, wobei das Bodenelement einen Abschnitt eines Zentralschachts um eine Ausnehmung herum aufweist;
- Figur 2:: eine Ansicht gemäß Figur 1 der mit parallel zueinander ausgerichtet und stehend angeordneten, elementaren Zellen gefüllten Wanne;
- Figur 3:: eine perspektivische Ansicht eines Zusammenbaus einer Kontaktplatine mit Anschlussleisten und Sammelleitern;
- Figur 4:: eine perspektivische Ansicht einer fertig aufgebauten Modulschicht;
- Figur 5a:: eine Draufsicht auf einen Abschnitt eines Zentralschachts gemäß Figuren 1, 2 und 4
- Figur 5b:: eine Schnittdarstellung in einer Ebene A-A von Figur 5a;
- Figuren 6a bis 6c:: eine perspektivische Ansicht und eine Draufsicht auf einen Ausschnitt B von Figur 4;
- Figur 6d:: eine perspektivische Ansicht des Ausschnitts B von Figur 4 mit eingesetzten Teil-Stromschienen;
- Figur 6e:: eine perspektivische Ansicht des Ausschnitts C von Figur 6d;
- Figur 6f:: eine perspektivische Ansicht eines Anschlussteils einer Teil-Stromschiene;
- Figuren 7a und 7b:: perspektivische Ansichten in einer Ebene D-D von Figur 6d mit eingesetzter sowie mit verbundener TeilStromschiene;
- Figur 8:: eine perspektivische Darstellung einer Schnittebene E-E über drei Modulschichten hinweg und
- Figur 9:: eine perspektivische Darstellung von Teil-Stromschienen und einer rückleiter-Stromschiene über 10 Modulschichten hinweg.

Über die verschiedenen Abbildungen der Zeichnung hinweg werden für gleiche Elemente oder Verfahrensschritte stets die gleichen Bezugszeichen verwendet. Ohne Beschränkung der Erfindung wird nachfolgend eine ebene Modulschicht als quaderförmiger Körper nur für einen Einsatz von Ausführungsbeispielen der Erfindung unter Verwendung in einem für elektrisch angetriebene Fahrzeuge ausgelegten Batteriemodul mit zylindrischen Zellen dargestellt und beschrieben. Es ist aber für den Fachmann offensichtlich, dass in gleicher Weise auch Anpassungen auf andere Raumformen mit Abkehr von ebenen z.B. zu gekrümmten Modulschichten hin möglich sind, zur verbesserten Ausnutzung eines vorhandenen Bauraums. Weiter müssen die einzelnen Zellen nicht zwingend stehend angeordnet sein, wie auch nicht alle nebeneinander.

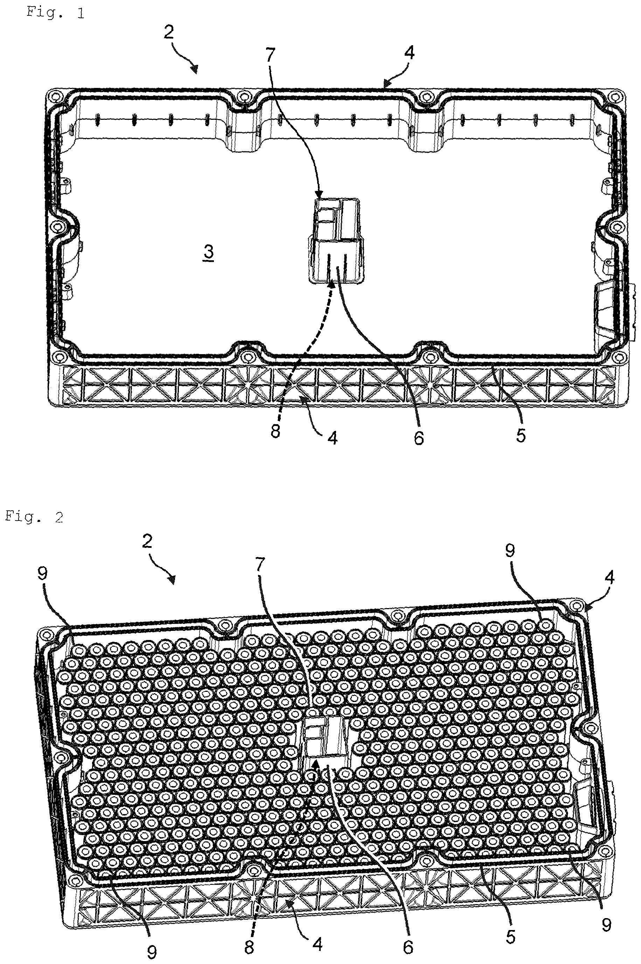

Zur Verdeutlichung der Vorteile eines erfindungsgemäßen Batteriesystems wird nachfolgend ein fortschreitender Aufbau einer Modulschicht 1 beschrieben. Figur 1 stellt dazu eine perspektivische Ansicht einer Wanne 2 mit einem Bodenelement 3 und an einem Rand des Bodenelements 3 anschließenden äußeren Rahmen 4 dar. Der Rahmen 4 läuft mit einem zweischaligem bzw. doppelwandigen Aufbau in eine endseitige Dichtung 5 aus. Das Bodenelement 3 weist zudem in einem zentralen Bereich einen Abschnitt 6 eines Zentralschachts 7 auf, der um eine Ausnehmung 8 herum mittig in dem Bodenelement 3 der Wanne 2 vorgesehen ist. In diesem Ausführungsbeispiel sind alle Bestandteile der Wanne 2 einstückig in Form eines Spritzgießteils ausgeführt.

Figur 2 zeigt die Ansicht gemäß Figur 1 der mit parallel zueinander ausgerichteten, elementaren Zellen 9 gefüllten Wanne 2. Für den Aufbau derartiger zylindrischer Zellen 9 wird i.d.R. eine Lithium-Ionen-Technologie eingesetzt. In nicht weiter zeichnerisch dargestellter Weise werden die in die Wanne 2 lose eingebrachten einzelnen Zellen 9 mittels einer Vergussmasse miteinander und an dem Bodenelement 3 fixiert. Diese Fixierung bereitet einerseits die Ausbildung einer Modulschicht 1 als einer mechanischen und konstruktiven Einheit vor, bewirkt zudem aber zur Entwärmung eine gute thermische Kopplung der einzelnen Zellen 9 miteinander und vor allem zu dem plattenartigen Bodenelement 3 hin. Für die Entwärmung der Zellen 9 ist das Bodenelement 3 von großer Bedeutung, das daher z.B. aus Aluminium besteht. Durch das Bodenelement 3 wird die Verlustwärme der Zellen 9 zum Rand des Bodenelements 3 in den äußeren Rahmen 4 hin geleitet. Der Rahmen 4 stellt als geschlossene Außenwand der Wanne 2 einen Kühlkörper da, durch den im Einsatz des fertig aufgebauten Batteriesystems Verlustwärme in nicht weiter dargestellter Weise an eine Kühlflüssigkeit abgegeben wird. Diese Außenwand kann bei Bedarf auch doppelwandig ausgeführt sein.

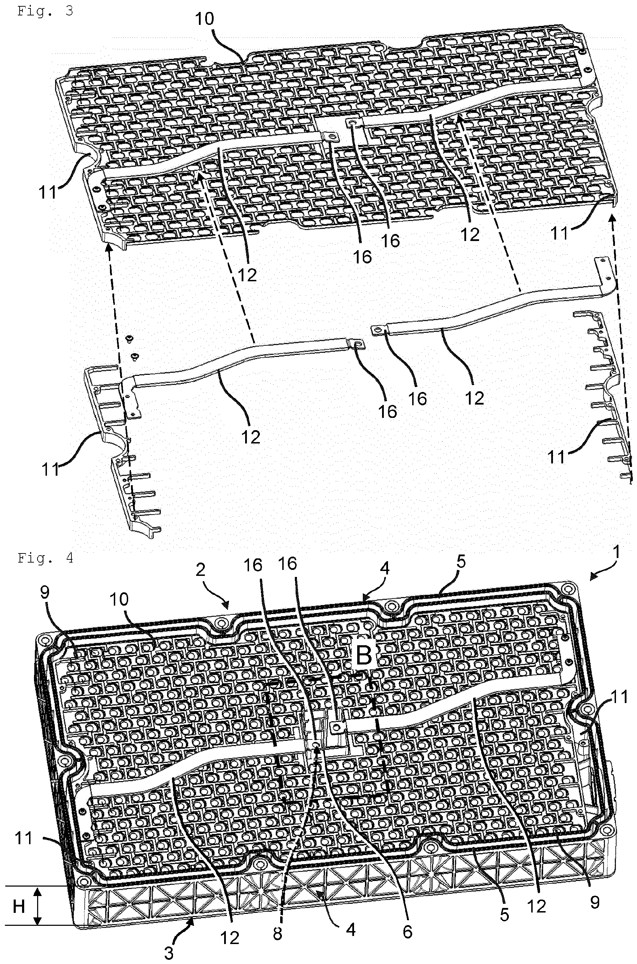

Figur 3 stellt eine perspektivische Ansicht eines Zusammenbaus einer Kontaktplatine 10 mit Anschlussleisten 11 und Sammelleitern 12 für die beiden Polaritäten durch Verschraubungen dar. Dieser Schritt stellt einen Abschluss für die Verschaltung der einzelnen Zellen 9 untereinander dar, durch den die Zellen 9 miteinander in Serien- und Parallel-Teilschaltungen über die Kontaktplatine 10 elektrisch miteinander verbunden werden. Die Kontaktplatine 10 ist je Polarität über eine Anschlussleiste 11 an einen Sammelleiter 12 elektrisch angeschlossen, um mit einem aus mehreren Modulschichten 1 aufgebauten Batteriesystem auf ein erforderliches Stromniveau und eine vorgegebene Spannung bei ausreichender Kapazität für einen Einsatz in einem KFZ oder LKW zu kommen. Ein Gesamtstrom des hier nicht weiter im Detail dargestellten Batteriesystems muss demnach auf die einzelnen Zellen 9 der Modulschichten 1 durch ein Netzwerk aus verschiedenen Leiter-Abschnitten verteilt und auch quasi wieder eingesammelt werden, um in einer Hochvoltverschaltungsbox an ein entsprechendes Fahrzeug übergeben zu werden. Die Anschlussleisten 11 sind hier entlang einander gegenüberliegender Außenkanten der Kontaktplatine 10 angeordnet und zum Anschluss an nicht weiter dargestellte Leitbahnen auf der Kontaktplatine 10 kammartig ausgebildet.

Figur 4 zeigt in der perspektivischen Ansicht der vorangehend beschriebenen Figuren die fertig aufgebaute Modulschicht 1. Hierzu wurde die zu Figur 3 beschriebene Anordnung zur Verschaltung der Zellen 9 bis zu den Sammelleitern 12 hin auf die in der Wanne 2 fixierten Zellen 9 aufgelegt und fixiert. Durch eine durch elektrische Verluste der Zellen 9 hervorgerufene Aufheizung würde ein zentraler Bereich in der Wanne 3 stets eine maximale Temperatur aufweisen. Es ist also sehr vorteilhaft, gerade in diesem zentralen Bereich keine Zellen 9 anzuordnen, sondern innerhalb eines kompakten Gesamtaufbaus gut geschützt Mittel zur elektrischen Verschaltung über diverse Modulschichten 1 hinweg vorzusehen. Hierzu ist der Abschnitt 6 des Zentralschachts 7 vorgesehen.

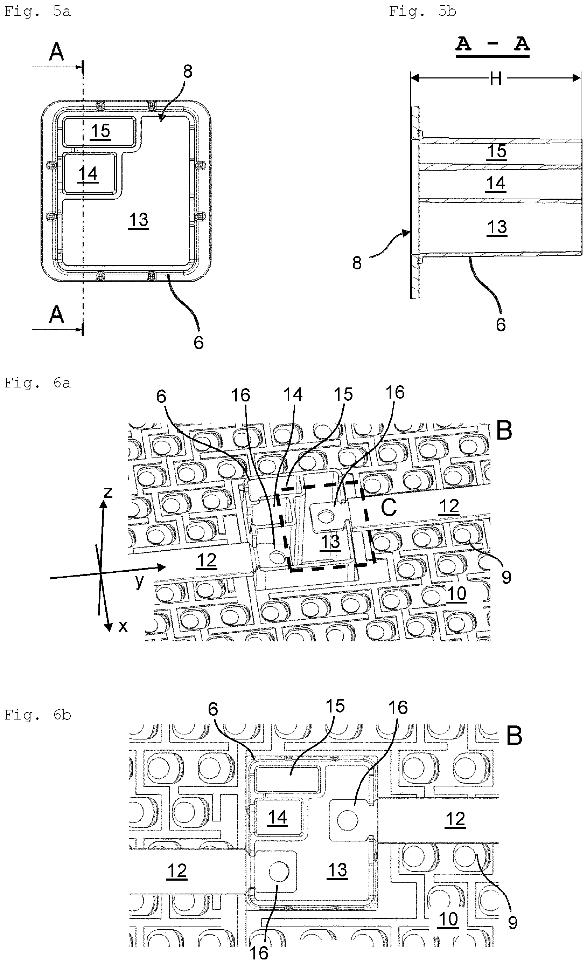

Figur 5a stellt eine Draufsicht auf einen Abschnitt des Abschnitts 6 des über eine Vielzahl von Modulschichten 1 zu bildenden Zentralschachts 7 gemäß Figuren 1, 2 und 4 dar. Dieser Abschnitt 6 ist als Spritzgießteil aus einem elektrisch isolierenden Kunststoff hergestellt, wird in eine zentrale Ausnehmung 8 des Bodenelements 3 eingesetzt und dabei verrastend fixiert. Dieser hier mit ungefähr quadratischer Grundfläche ausgeführte Abschnitt 6 ist segmentiert ausgeführt und weist daher voneinander fast über eine volle Höhe H des Abschnitts 6 voneinander getrennte Räume 13, 14, 15 mit jeweils nachfolgend noch erläuterten Aufgaben auf, siehe Figur 5b mit einer Schnittdarstellung in einer Ebene A-A von Figur 5a.

Figuren 6a bis 6c sind perspektivische Ansichten und eine Draufsicht auf einen Ausschnitt B von Figur 4, anhand derer die unterschiedlichen Aufgaben der Räume 13, 14, 15 innerhalb des Abschnitts 6 nun verdeutlicht werden. Der Zentralschacht 7 weist in seinem Abschnitt 6 mit den Räumen 13, 14, 15 getrennte Segmente auf, in denen hier nachfolgend über alle Modulschichten 1 hinweg zu zwei äußeren Kontaktpolen des Batteriesystems hin angeordneten Sammelschienen vorgesehen werden. Dazu sind die Räum 14, 15 quaderförmig ausgebildet, während Raum 13 eine ungefähr L-förmige Querschnittsfläche aufweist, in die freie Enden 16 der Sammelleiter 12 hineinragen. Diese freien Enden 16 der jeweils als Zufluss und Abfluss dienenden Sammelleiter 12 sind gegeneinander versetzt angeordnet und werden im Zuge eines Zusammenbaus eines aus mehreren Modulschichten 1 aufgebauten Batteriesystems jeweils das eine mit einer nachfolgenden und das andere mit einer vorhergehenden Modulschicht 1 elektrisch verbunden.

Der Abschnitt 6 eines Zentralschachts 7 weist im Bereich des Raums 13 rastend fixierende Aufnahmen 17 für die Sammelleiter 12 auf. Dabei sind die Aufnahmen 17 derart ausgebildet, dass ein Längenausgleich der Sammelleiter 12 nur in einer Richtung einer z-Achse eines kartesischen Koordinatensystems parallel zu der Längsachse der Zellen 9 möglich ist. Dementsprechend sind die freien Enden 16 der Sammelleiter 12 in dem Raum 13 des Abschnitts 6 auch nur in z-Richtung beweglich. Die Aufnahmen 17 weisen federelastische Rastnasen auf, die in Ausnehmungen 18 an den freien Enden 16 der Sammelleiter 12 eingreifen.

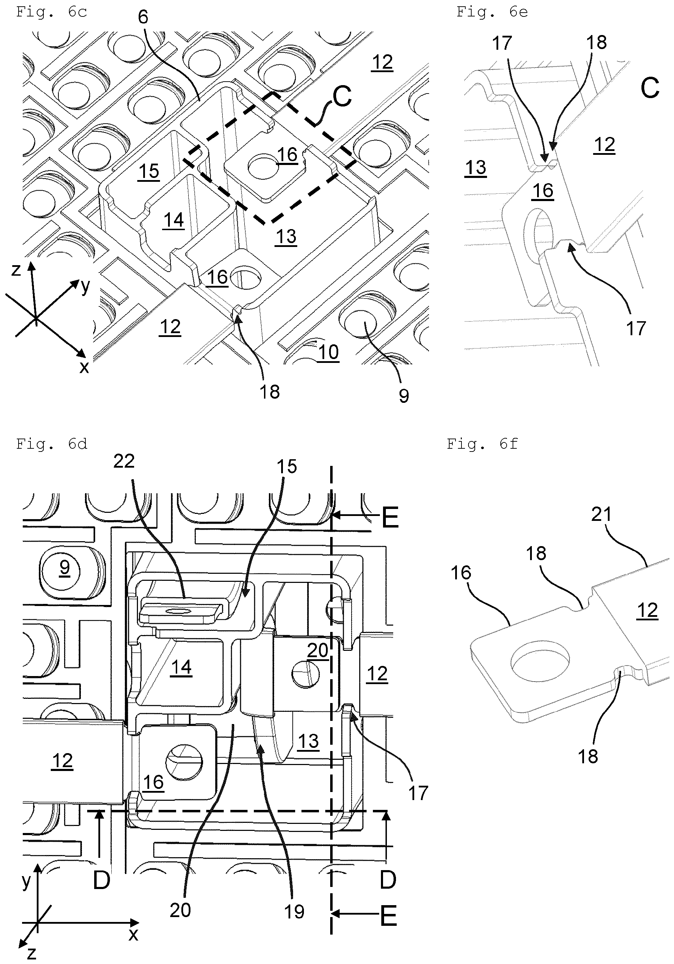

Figur 6d ist eine perspektivische Ansicht des Ausschnitts B von Figur 4 mit eingesetzten Teil-Stromschienen 19. Diese Teil-Stromschienen 19 weisen einen in mehreren Ebenen S-förmigen Verlauf mit gekröpften Endbereichen 20 zur Kontaktierung mit den im Abschnitt 6 fixierten freien Enden 16 der Sammelleiter 12 der betreffenden Modulschicht 1 auf. Eine Teil-Stromschiene 19 weist unter Bezug auf das angegebene kartesische Koordinatensystem in einen einer xy-Ebene, einer xz-Ebene sowie einer yz-Ebene ungefähr S-förmigen Verlauf auf. Durch diesen Verlauf wird ein Platzangebot innerhalb des L-förmigen Raums 13 bei optimalem Längenausgleich der Teil-Stromschienen 19 gut genutzt. Zwischen zwei Anschlussbereichen an den Endbereichen 20 ist die Teil-Stromschiene 19 von einer elektrischen Isolierung 21 umgeben, wie es u.a. auch die Sammelleiter 12 zwischen ihren jeweiligen Anschlussbereichen sind.

Figur 6e zeigt eine perspektivische Ansicht des Ausschnitts C von Figur 6c. Hierin ist als vergrößertes Detail zu erkennen, wie das freie Ende 16 des Sammelleiters 12 durch Ausnehmungen 18 nahe des freien Endes 16 rastend in einer Aufnahme 17 am Raum 13 des Abschnitts 6 in der xy-Ebene fixiert und in z-Richtung über einen definierten Bereich verschieblich angeordnet ist. Der Sammelleiter 12 kann damit in z-Richtung Toleranzen und auch thermischen Ausdehnungen oder Schrumpfungen ausgleichend folgen.

Figur 6f ist eine perspektivische Ansicht eines Anschlussteils der Teil-Stromschiene 19 von Figur 6e. Von einen von einem elektrischen Isolator 21 umhüllten Abschnitt läuft die Teil-Stromschiene 19 über kerbenförmige Ausnehmungen 18 in das freie Ende 16 aus.

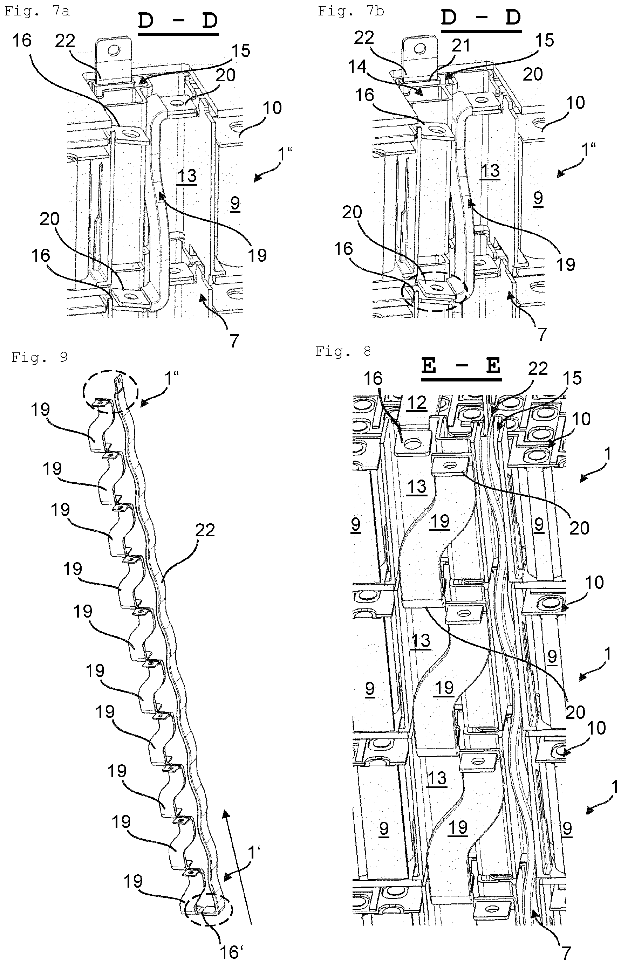

Figuren 7a und 7b zeigen perspektivische Ansichten in einer Ebene D-D von Figur 6d mit nur eingesetzter und mit bereits elektrisch verbundener Teil-Stromschiene 19 nun eine Verbindung einer Teil-Stromschiene 19 zwischen zwei freien Enden 16 von Sammelleitern 12 zweier in z-Richtung aufeinanderfolgend gestapelter Modulschichten 1. Figur 7b zeigt in dem gestrichelt dargestellten Bereich eine Ausgangssituation, Figur 7a eine finale Lage der aneinander fixierten Bauteile. Eine dauerhafte und elektrisch ausreichend gut leitfähige Verbindung wird hier durch ein Verprägen der jeweiligen Endbereiche 16, 20 hergestellt.

Figur 8 zeigt eine perspektivische Darstellung von Teil-Stromschienen 19 sowie eines Abschnitts der Rückleiter-Stromschiene 22 in einer Schnittebene E-E über drei Modulschichten 1 hinweg. Dabei sind die Teil-Stromschienen 19 sowie der Abschnitte der Rückleiter-Stromschiene 22 jeweils in den Räumen 13 und 15 des Zentralschachts 7 über drei Abschnitte 6 der Modulschichten 1 geführt. Die vorstehend beschriebene Wellenform dient zusätzlich einer Fixierung der Stromschienen 19, 22 in den entsprechenden Räumen 13, 15.

Während nach Zusammenbau und Durchkontaktierung so die Räume 13 und 15 mit Sammelleitern belegt sind, bleibt Raum 14 frei, um elektrische Steuer- und/oder Signalleitungen zur Regelung nicht weiter dargestellter Teilsysteme der jeweiligen Modulschichten 1 aufzunehmen, siehe Figur 7b. Zusätzlich wird der gesamte Zentralschacht 7 für eine zusätzliche Entwärmung in dem Bereich der beschriebenen Anordnung genutzt, der im Betrieb i.d.R. die höchsten Temperaturen aufweist.

Figur 9 ist schließlich eine perspektivische Darstellung von Teil-Stromschienen 19 und einer einstückigen Rückleiter-Stromschiene 22 über 10 nicht weiter dargestellte Modulschichten 1 hinweg. Die insgesamt gewellten Verläufe der Kette von Verbindungsstücken bzw. Teil-Stromschienen 19 und der rückleitenden Stromschiene 22 dienen als Ausgleich für Toleranzen in der Fertigung sowie Temperaturausdehnungen. In z-Richtung ist jeweils ein Ausgleichen durch elastische Verformung und Toleranzen beim Kontaktieren und Verbinden durch Verpressen mit der Teil-Stromschienen 19 zur Verbindung mit einer anschließenden Ebene vorgesehen. Bei einem Zusammenbau eines Batteriesystems mit 10 Modulschichten 1 wird abschließend die Rückleiter-Stromschiene 22 in die Räume 15 durch den Zentralschacht 7 über alle Modulschichten 1 hinweg eingeschoben und dann an einem Anschluss 16' der Sammelschiene 12 einer zu unterst liegenden Modulschicht 1' elektrisch verbunden. Aus einer zu oberst liegenden Modulschicht 1" treten dann zwei Anschlüsse heraus, über die ein Summenstrom der 10 in Serie miteinander verbundenen Modulschichten 1 mit der 10-fachen Potentialdifferenz einer einzelnen Modulschicht 1 anliegt. Hieran wird eine nicht weiter dargestellte Hochvoltverschaltungsbox angeschlossen, die i.d.R. ein Bestandteil eines der beiden Endkörper des beschriebenen Batteriesystems ist. Weiter endseitige Verschlüsse und ggf. Ummantelungen des Batteriesystems sowie Fixierungen der Modulschichten 1 sind ebenfalls nicht dargestellt, da sie in Anpassung auf einen Anwendungsfall selbstverständlich und damit bekannte Maßnahmen ins Belieben des Fachmanns gestellt sind.

Die Abbildung von Figur 9 verdeutlicht auch, wie vergleichsweise einfach durch Auswahl einer entsprechenden Anzahl von gleichartigen Modulschichten 1 ein jeweils erforderliches Stromniveau und eine vorgegebene Spannung bei ausreichender elektrischer Kapazität für einen Einsatz in einem KFZ oder LKW oder eine sonstige Anwendung auswählbar und fix einstellbar ist. Schließlich ist nur der Rückleiter 22 in seiner Länge einer jeweiligen Anwendung und einer Anzahl von Modulschichten 1 entsprechend auszuwählen. Alle anderen Teile bleiben hingegen als standardisiert vorgefertigte Module von dieser Anpassung unverändert. Neben einer in weiten Grenzen freien Anpassung elektrischer Kenngrößen ist damit auch ein Austausch beliebiger Modulschichten innerhalb eines Batteriesystems schnell, problemlos und sicher möglich.

### Bezugszeichenliste

- 1: Modulschicht
1' unterste Modulschicht in einem Stapel bzw. Stack
1" oberste Modulschicht in einem Stapel bzw. Stack
- 2: Wanne
- 3: Bodenelement der Wanne (2)
- 4: äußerer Rahmen der Wanne (2), ggf. doppelwandig
- 5: endseitige Dichtung am Rahmen (4) der Wanne (2)
- 6: Abschnitt eines Zentralschachts (7) im Bodenelement (3)
- 7: Zentralschacht
- 8: Ausnehmung in dem Bodenelement (3)
- 9: elementare Zelle
- 10: Kontaktplatine
- 11: Anschlussleiste
- 12: Sammelleiter
- 13: getrennter Raum im Abschnitt (6) des Zentralschachts (7)
- 14: getrennter Raum im Abschnitt (6) des Zentralschachts (7)
- 15: getrennter Raum im Abschnitt (6) des Zentralschachts (7)
- 16: freies Ende des Sammelleiters (12)
- 17: rastend fixierende Aufnahme am Raum (13)
- 18: Ausnehmung an freien Enden (16) der Sammelleiter (12)
- 19: Teil-Stromschiene mit S-förmigem Verlauf
- 20: gekröpfter Endbereich der Teil-Stromschiene (19)
- 21: elektrische Isolierung
- 22: Rückleiter, einstückig, gewellt

- H: Höhe des Rahmens (4) der Wanne (2)
- x,y,z: Koordinaten eines kartesischen Koordinatensystems mit z als Längsachse der Zellen 9

## Patentansprüche

1. Modulschicht (1) mit einer Anzahl elementarer Zellen (9), die miteinander in Serien- und Parallelschaltungen elektrisch verbunden sind,
**dadurch gekennzeichnet, dass**
die Modulschicht (1) als konstruktive Einheit aufgebaut ist, wobei die Zellen (9) der Modulschicht (1) in einer Wanne (2) auf einem Bodenelement (3) der Wanne (2) von einem als Kühlkörper ausgebildeten äußeren Rahmen (4) als Rand der Wanne (2) umschlossen angeordnet sind,
der äußere Rahmen (4) eine Dichtung (5) aufweist und
die Wanne (2) in einem zentralen Bereich des Bodenelements (3) einen Abschnitt (6) eines Zentralschachts (7) umfasst, in den mit den Zellen (9) der jeweiligen Modulschicht (1) leitend verbundene Sammelleiter (12) hinein ragend angeordnet sind.

2. Modulschicht (1) nach dem vorhergehenden Anspruch,
**dadurch gekennzeichnet, dass** die einzelnen Modulschichten (1) als vorgefertigte Einheiten ausgebildet sind, in denen die in die Wanne (2) eingebrachten einzelnen Zellen (9) mittels einer Vergussmasse an dem Bodenelement (3) fixiert sind.

3. Modulschicht (1) nach einem der vorhergehenden Ansprüche, **dadurch gekennzeichnet, dass** das Bodenelement (3) der Wanne (2) aus Aluminium besteht.

4. Modulschicht (1) nach dem vorhergehenden Anspruch,
**dadurch gekennzeichnet, dass** der Abschnitt (6) um eine Ausnehmung (8) herum in dem Bodenelement (3) vorgesehen ist, wo der Abschnitt (6) als Druckgießteil aus einem Kunststoff oder Aluminium fixiert angeordnet ist.

5. Modulschicht (1) nach einem der vorhergehenden Ansprüche, **dadurch gekennzeichnet, dass** der Abschnitt (6) als Segment eines Zentralschachts (7) ausgeführt ist und fast über eine volle Höhe (H) des Abschnitts (6) hinweg voneinander getrennte Räume (13, 14, 15) aufweist.

6. Modulschicht (1) nach dem vorhergehenden Anspruch,
**dadurch gekennzeichnet, dass** der Zentralschacht (7) getrennte Segmente in Form mindestens für die über alle Modulschichten (1) hinweg zu zwei äußeren Kontaktpolen des Batteriesystems hin angeordneten Sammelschienen (19, 22) voneinander getrennte Räume (13, 15) aufweist.

7. Modulschicht (1) nach einem der vorhergehenden Ansprüche, **dadurch gekennzeichnet, dass** der Abschnitt (6) eines Zentralschachts (7) fixierende oder rastende Aufnahmen (17) für die Sammelleiter (12) aufweist.

8. Modulschicht (1) nach dem vorhergehenden Anspruch,
**dadurch gekennzeichnet, dass** die Aufnahmen (17) derart ausgebildet sind, dass ein Längenausgleich von Teil-Stromschiene (19) und/oder Sammelleiter (12) nur in einer Richtung parallel zu der Längsachse (z) der Zellen (9) möglich ist.

9. Modulschicht (1) nach einem der vorhergehenden Ansprüche, **dadurch gekennzeichnet, dass** die Zellen (9) miteinander in Serien- und/oder Parallel-Teilschaltungen über eine Kontaktplatine (10) elektrisch miteinander verbunden sind und die Kontaktplatine (10) je Polarität über eine Anschlussleiste (11) an einen Sammelleiter (12) elektrisch angeschlossen ist.

10. Modulschicht (1) nach dem vorhergehenden Anspruch,
**dadurch gekennzeichnet, dass** die Anschlussleisten (11) entlang einander gegenüberliegender Außenkanten der Kontaktplatine (10) angeordnet und kammartig ausgebildet sind.

11. Batteriesystem, das als Vorrichtung zur Versorgung mit und Speicherung von elektrischer Energie zwischen zwei abschließenden Endkörpern eine Anzahl von Modulschichten (1) nach einem der vorstehenden Ansprüche umfasst,
**dadurch gekennzeichnet, dass**
das Batteriesystem als Stapel gleichartiger Modulschichten (1) in Richtung parallel der Längsachse (z) der Zellen (9) aufgebaut ist,
wobei eine Dichtung (5) an einem Rahmen (4) einer Modulschicht (1) elektrisch isolierend an einem Bodenelement (3) einer jeweils benachbarten Modulschicht (1) abdichtend angeordnet ist,
jede Modulschicht (1) einen Abschnitt (6) eines Zentralschachts (7) aufweist, in den mit den Zellen (9) der jeweiligen Modulschicht (1) leitend verbundene Sammelleiter (12) hinein ragen, um über alle Modulschichten (1) hinweg Sammelschienen (19, 22) zu zwei äußeren Kontaktpolen des Batteriesystems hin zu bilden.

12. Batteriesystem nach dem vorhergehenden Anspruch, **dadurch gekennzeichnet, dass** als elektrische Verbindung zwischen benachbarten Modulschichten (1) mindestens eine Teil-Stromschiene (19) oder Sammelschiene (22) vorgesehen ist, die mit einem S-förmigen Verlauf zum Kontaktieren mit Enden (16) der Sammelleiter (12) durch form-, kraft- und/oder stoffschlüssige Verbindungen ausgebildet ist, insbesondere durch Verpressen.

13. Batteriesystem nach einem der beiden vorhergehenden Ansprüche, **dadurch gekennzeichnet, dass** die Sammelleiter (12, 19, 22) als Stanz-Biegeteile aus Aluminium hergestellt sind.

14. Batteriesystem nach einem der drei vorhergehenden Ansprüche, **dadurch gekennzeichnet, dass** die Sammelleiter (12, 19, 22) außerhalb der für eine form-, kraft- und/oder stoffschlüssige Verbindung ausgebildeten Bereich mit einer elektrischen Isolierung (21) versehen sind.

15. Batteriesystem nach einem der vier vorhergehenden Ansprüche, **dadurch gekennzeichnet, dass** der Zentralschacht (7) als Summe aneinander anschließender Abschnitte (6) zur Entwärmung eines zentralen Bereichs jeder Modulschicht (1) ausgebildet ist.

## Claims

1. A module layer (1) with a number of elementary cells (9), which are electrically connected to one another in series circuits and parallel circuits,
**characterized in that**
the module layer (1) is embodied as a structural unit, wherein the cells (9) of the module layer (1) in a tray (2) are positioned on a base element (3) of the tray (2) and are enclosed by an outer frame (4) that is embodied as a heat sink and constitutes the rim of the tray (2), the outer frame (4) has a seal (5), and in a central region of the base element (3), the tray (2) has a section (6) of a central shaft (7) into which bus bars (12) protrude, which produce a conductive connection with the cells (9) of the respective module layer (1).

2. The module layer (1) according to the preceding claim, **characterized in that** the individual module layers (1) are embodied as prefabricated units in which the individual battery cells (9) inserted into the tray (2) are anchored to the base element (3) by means of a casting compound.

3. The module layer (1) according to one of the preceding claims, **characterized in that** the base element (3) of the tray (2) consists of aluminum.

4. The module layer (1) according to the preceding claim, **characterized in that** the section (6) is provided around an opening (8) in the base element (3), wherein the section (6), as a die-cast part made of a plastic or aluminum, is anchored in position.

5. The module layer (1) according to one of the preceding claims, **characterized in that** the section (6) is embodied as a segment of a central shaft (7) and has spaces (13, 14, 15) that are separate from one another through almost the entire height (H) of the section (6).

6. The module layer (1) according to the preceding claim, **characterized in that** the central shaft (7) has separate segments in the form of spaces (13, 15), which are separate from each other, for the bus bars (19, 22) extending through all of the module layers (1) to two outer contact poles of the battery system.

7. The module layer (1) according to one of the preceding claims, **characterized in that** the section (6) of a central shaft (7) has anchoring or detent-engaging openings (17) for the bus bars (12).

8. The module layer (1) according to the preceding claim, **characterized in that** the openings (17) are embodied in such a way that a length compensation of the sub-bus bar (19) and/or bus bar (12) is possible only in a direction parallel to the longitudinal axis (z) of the cells (9).

9. The module layer (1) according to one of the preceding claims, **characterized in that** the cells (9) are electrically connected to one another in series subcircuits and/or parallel subcircuits via a contact board (10) and for each polarity, the contact board (10) is electrically connected to a bus bar (12) via a terminal strip (11).

10. The module layer (1) according to the preceding claim, **characterized in that** the terminal strips (11) are positioned along opposite outer edges of the contact board (10) from each other and are embodied in comb-like fashion.

11. A battery system, which, as a device for supplying and storing electrical energy between two final end components, comprises a number of module layers (1) according to one of the preceding claims,
**characterized in that**
the battery system is embodied as a stack of uniform module layers (1) in a direction parallel to the longitudinal axis (z) of the cells (9),
wherein a seal (5) on a frame (4) of a module layer (1) is positioned in an electrically insulating, sealed way against a base element (3) of a respectively adjacent module layer (1),
each module layer (1) has a section (6) of a central shaft (7) into which bus bars (12) protrude, which produce a conductive connection with the cells (9) of the respective module layer (1) in order to form bus bars (19, 22) extending through all of the module layers (1) to two outer contact poles of the battery system.

12. The battery system according to the preceding claim, **characterized in that** at least one sub-bus bar (19) or bus bar (22) is provided as an electrical connection between adjacent module layers (1), which, with an S-shaped curve, is embodied for contacting ends (16) of the bus bars (12) by means of form-fitting, non-positive, and/or integrally bonded connections, in particular by means of crimping.

13. The battery system according to one of the two preceding claims, **characterized in that** the bus bars (12, 19, 22) are produced as stamped and bent parts made of aluminum.

14. The battery system according to one of the three preceding claims, **characterized in that** outside of the region that is embodied for a form-fitting, non-positive, and/or integrally bonded connection, the bus bars (12, 19, 22) are provided with an electrical insulation (21).

15. The battery system according to one of the four preceding claims, **characterized in that** the central shaft (7), as the sum of the adjacent sections (6), is advantageously embodied for extracting heat from a central region of each module layer (1).

## Revendications

1. Couche modulaire (1) comprenant un certain nombre de cellules élémentaires (9) qui sont connectées électriquement les unes aux autres dans des circuits en série et en parallèle,
**caractérisée par le fait que**
la couche modulaire (1) est construite comme une unité structurelle, les cellules (9) de la couche modulaire (1) étant disposées dans une auge (2) sur un élément de fond (3) de la cuvette (2) entourée d'un cadre extérieur (4) conçu comme un dissipateur de chaleur en tant que bord de l'auge (2),
le cadre extérieur (4) comporte un joint (5) et
l'auge (2) comprend, dans une région centrale de l'élément de base (3), une section (6) d'un arbre central (7) dans lequel des conducteurs collecteurs (12) reliés par conduction aux cellules (9) de la couche modulaire respective (1) sont disposés en saillie.

2. Couche modulaire (1) selon la revendication précédente, **caractérisée par le fait que** les différentes couches modulaires (1) sont construites en tant qu'unités préfabriquées dans lesquelles les cellules individuelles (9) introduites dans l'auge (2) sont fixées à l'élément de base (3) au moyen d'un composé de coulée.

3. Couche modulaire (1) selon l'une des revendications précédentes, **caractérisée par le fait que** l'élément de base (3) de l'auge (2) est en aluminium.

4. Couche modulaire (1) selon la revendication précédente, **caractérisée par le fait que** la section (6) est prévue autour d'une cavité (8) dans l'élément de base (3), où la section (6) est fixée comme une pièce moulée sous pression en plastique ou en aluminium.

5. Couche modulaire (1) selon l'une des revendications précédentes, **caractérisée par le fait que** la section (6) est conçue comme un segment d'un arbre central (7) et comporte des espaces (13, 14, 15) séparés les uns des autres sur presque toute la hauteur (H) de la section (6).

6. Couche modulaire (1) selon la revendication précédente, **caractérisée en ce que** l'arbre central (7) a des segments séparés sous la forme d'espaces (13, 15) séparés les uns des autres au moins pour les barres (19, 22) disposées à travers toutes les couches modulaires (1) vers deux pôles de contact extérieurs du système de batterie.

7. Couche modulaire (1) selon l'une des revendications précédentes, **caractérisée en ce que** la section (6) d'un arbre central (7) comporte des réceptacles de fixation ou de verrouillage (17) pour les conducteurs collecteurs (12).

8. Couche modulaire (1) selon la revendication précédente, **caractérisée en ce que** les réceptacles de fixation (17) sont désaxés de telle sorte que la compensation de longueur du jeu de barres partielles (19) et/ou du jeu de conducteurs collecteurs (12) n'est possible que dans une direction parallèle à l'axe longitudinal (z) des cellules (9).

9. Couche modulaire (1) selon l'une des revendications précédentes, **caractérisée par le fait que** les cellules (9) sont connectées électriquement les unes aux autres en circuits partiels en série et/ou en parallèle par l'intermédiaire d'une carte de contact (10) et que la carte de contact (10) est connectée électriquement à un jeu de conducteurs collecteurs (12) par l'intermédiaire d'une bande de connexion (11) pour chaque polarité.

10. Couche modulaire (1) selon la revendication précédente, **caractérisée par le fait que** les bandes de connexion (11) sont disposées le long des bords extérieurs mutuellement opposés de la carte de contact (10) et sont en forme de peigne.

11. Système de batterie comprenant un certain nombre de couches modulaires (1) selon l'une quelconque des revendications précédentes en tant que dispositif d'alimentation et de stockage de l'énergie électrique entre deux corps terminaux,
**caractérisé par le fait que**
le système de batterie est constitué d'un empilement de couches modulaires similaires (1) dans une direction parallèle à l'axe longitudinal (z) des cellules (9),
dans lequel un joint (5) sur un cadre extérieur (4) d'une couche modulaire (1) est disposé d'une manière électriquement isolante sur un élément de base (3) d'une couche modulaire (1) adjacente,
chaque couche modulaire (1) possède une section (6) d'un arbre central (7) dans lequel des conducteurs collecteurs (12) connectés de manière conductrice aux cellules (9) de la couche modulaire respective (1) font saillie afin de former des barres (19, 22) à travers toutes les couches modulaire (1) jusqu'à deux pôles de contact extérieurs du système de batterie.

12. Système de batterie selon la revendication précédente, **caractérisé en ce qu'**au moins un jeu de barres partielles (19) ou un jeu de barres (22) est fourni comme connexion électrique entre les couches modulaire adjacentes (1), lequel jeu de barres partielles (19) ou jeu de barres (22) est formé avec un parcours en forme de S pour entrer en contact avec les extrémités (16) des conducteurs du jeu de conducteurs collecteurs (12) par des connexions d'ajustement de forme, d'ajustement de force et/ou d'ajustement de matériau, en particulier par pressage.

13. Système de batterie selon l'une des deux revendications précédentes, **caractérisé par le fait que** les conducteurs collecteurs (12, 19, 22) sont fabriqués sous forme de pièces embouties et pliées en aluminium.

14. Système de batterie selon l'une des trois revendications précédentes, **caractérisé en ce que** les conducteurs collecteurs (12, 19, 22) sont pourvus d'une isolation électrique (21) à l'extérieur des zones destinées à une connexion par ajustement de forme, par ajustement de force et/ou par ajustement de matériau.

15. Système de batterie selon l'une des quatre revendications précédentes, **caractérisé en ce que** l'arbre central (7) est formé d'une somme de sections contiguës (6) pour refroidir une région centrale de chaque couche modulaire (1).
